# EUROPÄISCHE PATENTSCHRIFT

(11) **EP 3 801 817 B1**
(45) Veröffentlichungstag und Bekanntmachung des Hinweises auf die Patenterteilung: **30.07.2025**
(21) Anmeldenummer: 19730297.9
(22) Anmeldetag: 06.06.2019
(51) Int. Cl.: B01D 39/16, B01D 39/20, B32B 5/02, B32B 5/26, D04H 1/4242, D04H 1/43, D04H 1/4374, D04H 1/498

(54) **FILTERMEDIUM UMFASSEND EINEN VERSTAERKTEN VLIESSTOFF**
FILTER MEDIA COMPRISING A REINFORCED NONWOVEN FABRIC
MILIEU FILTRANT COMPRENANT UN NON-TISSÉ RENFORCÉ

(30) Priorität: 08.06.2018 DE 102018209200
(43) Veröffentlichungstag der Anmeldung: 14.04.2021
(73) Patentinhaber: SGL Carbon SE, 65201 Wiesbaden (DE)
(72) Erfinder: SCHWENKE, Almut, 86405 Meitingen (DE); JUNG, Manfred, 86405 Meitingen (DE); OETTINGER, Oswin, 86405 Meitingen (DE); SCHMITT, Rainer, 86405 Meitingen (DE)
(86) Internationale Anmeldenummer: PCT/EP2019/064888
(87) Internationale Veröffentlichungsnummer: WO 2019/234198

(56) Entgegenhaltungen:
- EP-A1- 0 962 243
- EP-A1- 1 862 208
- WO-A1-2017/127638
- US-A- 4 181 513
- US-A- 4 444 574

## Beschreibung

Die vorliegende Erfindung betrifft ein Filtermedium umfassend einen verstärkten Vliesstoff, ein Verfahren zu dessen Herstellung sowie dessen Verwendung.

Verstärkte Vliesstoffe werden in vielen Bereichen eingesetzt. Ein Anwendungsgebiet ist die Verwendung für Filter, beispielsweise zur Staubabscheidung in verschiedenen Industrien wie z.B. der Müllverbrennung, der Kohle- und Kraftwerksindustrie, im Bergbau, der Gießereianwendung oder der Graphitherstellung. Die verwendeten Filtermedien können aus mehreren Schichten bestehen, beispielsweise aus drei Schichten, welche durch mechanische Verfestigung (z.B. Vernadeln oder Wasserstrahlverfestigung) miteinander verbunden werden. Die folgenden drei Schichten werden als Beispiel genannt: 1) eine erste Vliesschicht als Filterschicht, 2) eine Verstärkungsschicht, z.B. eine Gewebeeinlage, zur mechanischen Verstärkung, insbesondere für das Abreinigen mittels Druckluftstoß, 3) eine zweite Vliesschicht als Schutzschicht der Verstärkungsschicht. Wichtige Parameter eines Filtermediums sind die Staubabscheidungsleistung, der Druckverlust, sowie die mechanische, chemische und thermische Beständigkeit des Materials.

WO 2017/127638 A1 beschreibt ein Filtermedium, umfassend eine Mischung von Filtermedienfasern, umfassend oxidierte Polyacrylnitrilfasern und Fasern aus mindestens einem anderen Polymer.

US 4 444 574 A beschreibt ein Filtermaterial aus Polyacrylonitrilfaser, die teilkarbonisiert sind.

US 4 181 513 A beschreibt ein adsorptives Filtermaterial, das eine adsorptive Schicht aus Aktivkohlefasern und eine verstärkende Schicht aus Fasern umfasst

EP 0 962 243 A1 beschreibt ein Filtermedium, welches ein Filtergewebe aus Glasfasern hat, das durch Vernadeln mit temperaturfesten, polymeren Stapelfasern belegt ist.

EP 1 862 208 A1 beschreibt ein Filtermedium, welches ein Basaltfasern enthaltendes Stützgewebe umfasst, wobei mindestens eine Seite des Stützgewebes mit Stapelfasern belegt ist.

Für anspruchsvolle Bedingungen werden textile Filtermedien aus polymeren Hochleistungsfasern, insbesondere Polytetrafluorethylen (PTFE, Teflon), m-Aramid und Polyimid verwendet. Diese Filtermedien können aufgrund ihrer thermischen Beständigkeit nur bis ca. 260 °C eingesetzt werden. PTFE hat zwar eine etwas höhere thermische Beständigkeit, wird aber aufgrund der Entwicklung giftiger Gase und aufgrund des starken Kriechens, was zu einem mechanischen Versagen des Filtermediums führt, dennoch nicht bei höheren Temperaturen als 260 °C verwendet

Um textile Filter bei einer höheren Temperatur als 260 °C, beispielsweise bei möglichen Temperaturspitzen, einsetzen zu können, wird ein verstärkter Vliesstoff angestrebt, welcher Temperaturen von mehr als 260 °C standhält. Dies gilt sowohl für die Vliesschicht(en) als auch für die Verstärkungsschicht des verstärkten Vliesstoffs.

Statische Aufladung nicht leitfähiger Filtermedien kann zu Funkenbildung und Funkenflug führen, welcher wiederum die Filterstruktur schädigen kann. Auch thermische Hotspots können zu einer solchen Schädigung führen. Es besteht somit ein Bedarf an einem verstärkten Vliesstoff, der mindestens eine thermisch und/oder elektrisch leitfähige Schicht aufweist.

Verstärkte Vliesstoffe werden ebenfalls zur Filterung von flüssigen Substanzen eingesetzt. Bedeutende Parameter sind hierbei insbesondere die chemische Beständigkeit und die Korrosionsbeständigkeit der eingesetzten verstärkten Vliesstoffe. Ein Anwendungsgebiet bei dem die chemische Beständigkeit kritisch ist, ist die Filterung von stark sauren oder stark alkalischen Substanzen.

Die Aufgabe der vorliegenden Erfindung ist es daher, ein Filtermedium bereitzustellen, welches insbesondere bei Temperaturen von größer als 260 °C, eingesetzt werden kann. Weiterhin soll dieses Filtermedium elektrisch und/oder thermisch leitfähig sein, es soll eine chemische Beständigkeit und Korrosionsbeständigkeit aufweisen, und es soll nicht brennbar sein. Zudem soll das Filtermedium sowohl zum Filtern von Gasen als auch von Flüssigkeiten geeignet sein.

Im Rahmen der vorliegenden Erfindung wird diese Aufgabe durch die Bereitstellung eines Filtermediums umfassend einen verstärkten Vliesstoff, wobei der Vliesstoff mindestens eine aus präoxidiertem Polyacrylnitril (PAN) bestehende Vliesschicht und mindestens eine Verstärkungsschicht aufweist, wobei die Verstärkungsschicht eine erste Seite und eine zweite Seite aufweist, und wobei die Verstärkungsschicht von der ersten Seite und/oder der zweiten Seite von der mindestens einen Vliesschicht bedeckt ist, und wobei ein Material der mindestens einen Verstärkungsschicht (20) ausgewählt aus der Gruppe bestehend aus Metallfasern, Metalldrähten, präoxidierten PAN-Fasern, teilkarbonisierten PAN-Fasern oder Kohlenstofffasern ist, gelöst.

Erfindungsgemäß wurde erkannt, dass wenn mindestens eine Vliesschicht des verstärkten Vliesstoffs aus präoxidiertem PAN besteht, der Vliesstoff - und damit auch das Filtermedium - eine Temperaturbeständigkeit bei größer 260 °C aufweist. Diese Eigenschaft wird verstärkt, wenn eine weitere

Temperaturbehandlung des präoxidierten PAN's unter Ausschluss von Sauerstoff unter Schutzgas erfolgt. Bei dieser Temperaturbehandlung kann teilkarbonisiertes PAN oder karbonisiertes PAN gebildet werden. Zudem kann der verstärkte Vliesstoff - und damit das Filtermedium - dann eine höhere elektrische und thermische Leitfähigkeit als bekannte Filtermaterialien aufweisen. Das präoxidierte PAN, teilkarbonisierte PAN oder karbonisierte PAN wird bevorzugt in Form von Fasern verwendet, wobei das karbonisierte PAN dann in Form von Kohlenstoff-Fasern vorliegt.

Teilkarbonisierte oder karbonisierte verstärkte Vliesstoffe zeichnen sich neben der Medienbeständigkeit auch durch ihre elektrische Leitfähigkeit aus. Daher können diese auch als Elektrodenmaterial für elektrochemische Prozesse wie z.B. Energiespeicherung oder Elektrolyse eingesetzt werden. Die textile Struktur des Vliesstoffes kann durch die Auswahl des Verfahrens sowie der Herstellungsparameter angepasst werden. Im Vergleich zu anderen gängigen Elektrodenmaterialien, können verstärkte Textilien auf Basis von Kohlenstofffasern relativ kosteneffizient als Rollenware hergestellt werden.

PAN stellt das Polymer von Acrylnitril dar, und wird häufig als Textilfaser verwendet. Es kann in Form eines Homopolymers oder in Form eines Copolymers vorliegen. Copolymere enthalten üblicherweise Acrylnitril mit einem Anteil von mehr als 85 % und ein Comonomer wie beispielsweise Methylmethacrylat oder Vinylchlorid.

Präoxidiertes PAN bedeutet, dass eine Temperaturbehandlung von PAN in Anwesenheit von Sauerstoff bei typischerweise 200 - 300 °C erfolgt ist. Weitere Begriffe für präoxidiertes PAN sind thermisch stabilisiertes PAN oder oxidiertes PAN. Präoxidiertes PAN ist als Faser, beispielsweise als PANOX^{®} von der SGL TECHNOLOGIES GmbH, kommerziell erhältlich. PANOX^{®} ist eine oxidierte, thermisch stabilisierte Polyacrylnitril-(PAN)-Faser, die aufgrund ihrer chemischen Struktur nicht brennt, schmilzt, erweicht oder tropft. Bei einem LOI-Wert (limiting oxygen index = Grenzsauerstoffkonzentration) von über 50 %, liegt präoxidiertes PAN im Vergleich zu anderen organischen Fasern wesentlich höher und entspricht nach DIN 66083 der Brennklasse S-a. Brennbarkeit liegt vor, wenn ein Stoff nach der Entflammung weiterbrennt, auch wenn die Zündquelle entfernt wird. Weiterhin weist präoxidiertes PAN eine hohe Temperaturbeständigkeit und eine hohe chemische Beständigkeit auf. Der Kohlenstoffgehalt des präoxidiertes PAN liegt typischerweise zwischen 60 % und 65 %.

Teilkarbonisiertes PAN bedeutet, dass präoxidiertes PAN einer Temperaturbehandlung unter Schutzgas zwischen 300 °C und 1000 °C unterzogen wird. Der Kohlenstoffgehalt von teilkarbonisiertem PAN liegt in einem Bereich von mehr als 65 % bis weniger als 92 %. Wenn präoxidiertes PAN einer Temperaturbehandlung unter Schutzgas bei mehr als 1000 °C unterzogen wird, so entsteht ein karbonisiertes PAN, also Kohlenstoff-Fasern, welche einen Kohlenstoffgehalt von mehr als 92 % aufweist.

Anstelle von PAN, insbesondere PAN-Fasern, können auch Cellulosefasern, als Prekursoren für die Herstellung von teilkarbonisierten Fasern oder karbonisierten Fasern (Kohlenstoff-Fasern) verwendet werden. Auch diese auf Cellulose basierenden Fasern können in mindestens einer Vliesschicht und/oder mindestens einer Verstärkungsschicht des verstärkten Vliesstoffs des Filtermediums enthalten sein. Es ist auch möglich, wenn teilkarbonisierte oder karbonisierte Fasern verwenden, zu deren Herstellung eine Mischung aus präoxidierten PAN-Fasern und Cellulosefasern eingesetzt wird.

Das erfindungsgemäße Filtermedium kann sowohl zum Filtern von Gasen als auch von Flüssigkeiten eingesetzt werden.

Vorzugsweise weist das erfindungsgemäße Filtermedium eine flächige oder runde Form auf. Die runde Form kann als Rohr, Schlauch oder als zylindrischer Form (Hohlzylinder) vorliegen.

Gemäß einer Ausführungsform der vorliegenden Erfindung stellt die mindestens eine Verstärkungsschicht des verstärkten Vliesstoffes des Filtermediums ein Gewebe, ein Gelege, ein Gewirk, ein Gestrick, ein Geflecht oder ein Grid dar, wobei diese Verstärkungsschichten durch Verwendung von Endlosfasern (Filamente) oder Garnen hergestellt sein können. Diese Art der Verstärkungsschicht erhöht die mechanische Beständigkeit des verstärkten Vliesstoffs. Bei Verwendung von mindestens einer solchen Verstärkungsschicht, insbesondere in Form eines Geflechts, Gewirks oder Gestricks, kann die verstärkte Vliesschicht in einer runden, dehnbaren oder elastischen Form ausgeführt werden, die eine einfachere Verwendung des Filtermediums erlaubt. So lässt sich dieses elastische Filtermedium beispielsweise leichter über Stützkonstruktionen stülpen oder durch Temperaturbehandlung als teilkarbonisierter oder karbonisierter verstärkter Vliesstoff aufschrumpfen. Die Dehnbarkeit ist bei der Herstellung des teilkarbonisierten oder karbonisierten Filtermediums ein zusätzlicher Vorteil, da der Schrumpf der Vliesschicht bei der Teilkarbonisierung oder Karbonisierung noch besser ausgeglichen werden kann.

Gewebe und Gelege werden aus Endlosfasern oder Garnen hergestellt. Bei Gelegen werden die Faserstränge abgelegt und im Anschluss mithilfe einer Fadenschnur verwirkt oder aber mit einem Kunststoff verklebt. Die Fasern können dabei alle in einer Richtung ausgerichtet sein (unidirektional) oder aber als Mehrlagensystem, bei dem die verschiedenen Schichten in definierten Winkeln abgelegt werden (multiaxial).

Gewebe bestehen aus rechtwinklig verkreuzten Fadensystemen (Kette und Schuss). Dabei sind verschiedene Bindungen wie beispielsweise Leinwand- oder Köperbindung möglich, mit denen sich Festigkeit, Drapierbarkeit oder Oberflächenstruktur anpassen lassen.

Flechtstrukturen werden durch das regelmäßige Verkreuzen mehrerer Faser- oder Garnstränge hergestellt. Im Unterschied zum Weben werden die Fäden dabei nicht rechtwinklig zur Produkthauptrichtung zugeführt.

Gestricke und Gewirke sind textile Flächengebilde, die auch als Maschenware bezeichnet werden und sich durch ihre flexible und elastische Struktur auszeichnen. Gestricke werden durch Maschenbildung aus horizontal vorgelegten Einzelfäden hergestellt. Bei den Gewirken werden ebenso Einzelfäden vorgelegt - allerdings erfolgt die Maschenbildung durch gleichzeitig bewegte Nadeln.

Als Grid wird typischerweise netzartige Gewirke bezeichnet. Dabei sind fein- oder grobmaschige Netze bzw. Gewirke mit unterschiedlichen Strukturen möglich. Grids werden über die Orientierung der einzelnen Ribben, die eingeschlossene Lochfläche, die jeweiligen Winkel der Ribben zueinander als auch die Breite der Ribben weiter beschrieben. Alle Formen sind im Rahmen der Erfindung als Verstärkung möglich.

Gemäß der vorliegenden Erfindung stellt ein Material der Verstärkungsschicht des verstärkten Vliesstoffs des Filtermediums ein Material ausgewählt aus der Gruppe bestehend aus Metallfasern, Metalldrähten, präoxidierten PAN-Fasern, teilkarbonisierten PAN-Fasern oder karbonisierten PAN-Fasern (Kohlenstoff-Fasern) dar. Bevorzugt wird als Material für diese Verstärkungsschicht präoxidierte PAN-Fasern, teilkarbonisierte PAN-Fasern oder Kohlenstoff-Fasern, bevorzugter teilkarbonisierte PAN-Fasern oder Kohlenstoff-Fasern, besonders bevorzugt Kohlenstoff-Fasern, eingesetzt. Die genannten Materialien weisen den Vorteil auf, dass sie temperaturbeständig, auch bei Temperaturen von größer als 260 °C sind, und dass sie eine hohe chemische Beständigkeit aufweisen. Werden Metallfasern oder Metalldrähte als mindestens eine Verstärkungsschicht des verstärkten Vliesstoffs benutzt, so können gefaltete Filterstrukturen hergestellt werden.

Vorzugsweise umfasst das erfindungsgemäße Filtermedium enthaltend einen verstärkten Vliesstoff mindestens eine aus präoxidiertem PAN bestehende Vliesschicht, welche teilkarbonisiert oder karbonisiert, bevorzugt teilkarbonisiert, worden ist. In diesem Falle stellt ein Material der Verstärkungsschicht des verstärkten Vliesstoffs des Filtermediums ein Material ausgewählt aus der Gruppe bestehend aus Metallfasern, Metalldrähten, präoxidierten PAN-Fasern, teilkarbonisierten PAN-Fasern oder karbonisierten PAN-Fasern (Kohlenstoff-Fasern) dar. Die Erfinderin hat eine Reihe von Versuchen mit verstärkten Vliesstoffen durchgeführt, bei denen mindestens eine Vliesschicht karbonisiertes PAN darstellt. Hierbei zeigte sich, dass diese erfindungsgemäßen Ausführungsformen eine deutlich höhere Temperaturbeständigkeit aufweisen als bekannte polymere Hochleistungsfasern, wie beispielsweise PTFE, m-Aramid oder Polyimid. Bei Verwendung eines solchen erfindungsgemäßen Filtermediums bei höheren Temperaturen, insbesondere bei Temperaturen von mindestens bis zu 260 °C, ist es möglich das zu filternde Medium (Gas oder Flüssigkeit) bei Temperaturen von mindestens 260 °C zu filtern und anschließend oder während des Filtervorgangs einem Katalyseprozess (z.B. Entstickung) zu unterziehen. Dieser Katalyseprozess erfordert typischerweise höhere Temperaturen als die Temperaturbeständigkeit gängiger Filtermaterialien. Daher muss bislang das Filtermedium zur Filtration gekühlt und zur Entstickung wieder aufgewärmt werden. Mit dem erfindungsgemäßen Vliesstoff fällt diese Kühl und Aufwärmschritt weg, wodurch eine Energieeinsparung erzielt werden kann. Zudem kann das erfindungsgemäße Filtermedium vorteilhafterweise als Filter vor einem Wärmetauscher eingesetzt werden, da der Filter eine Verunreinigung des Wärmetauschers verhindern und somit dessen Lebensdauer und Effizienz verbessern kann.

Bevorzugter stellt präoxidiertes PAN, welches mindestens teilkarbonisiert, bevorzugt karbonisiert, worden ist, auch die Verstärkungsschicht des verstärkten Vliesstoffs des erfindungsgemäßen Filtermediums dar, so dass also mindestens eine Vliesschicht als auch mindestens eine Verstärkungsschicht des verstärkten Vliesstoffs aus teilkarbonisiertem PAN, bevorzugt aus karbonisiertem PAN (Kohlenstofffasern), sind. Hierdurch kann eine hohe elektrische und thermische Leitfähigkeit des verstärkten Vliesstoffs vorliegen. In dem sowohl mindestens eine Vliesschicht als auch die mindestens eine Verstärkungsschicht karbonisiert sind, ist die Verstärkungsschicht ebenfalls bei höheren Temperaturen temperaturbeständig, wobei hierdurch ermöglicht wird, dass ein Auslagern des verstärkten Vliesstoffs auf 280 °C in 5 Tagen an Luft zu einem Massenverlust von höchstens 5 % führt. Weiterhin weist das Filtermedium eine sehr hohe chemische Beständigkeit auf und ist außerordentlich korrosionsbeständig. Weiterhin ist dieses Filtermedium nicht brennbar und weist kein sichtbares Kriechverhalten auf.

Bevorzugt weist der verstärkte Vliesstoff des erfindungsgemäßen Filtermediums mindestens zwei Vliesschichten auf, welche an der ersten Seite (einer Seite) der Verstärkungsschicht angeordnet sind, wobei jeder dieser Vliesschichten aus einem unterschiedlichen Material hergestellt ist, und somit unterschiedliche Eigenschaften aufweist. Beispielsweise ist es möglich, dass wenn zwei solcher Vliesschichten verwendet werden, eine Vliesschicht aus Fasern mit einem größeren mittleren Durchmesser als die Fasern der anderen Vliesschicht hergestellt werden oder beide Vliesschichten weisen unterschiedliche Dichten auf. Wenn ein solcher verstärkter Vliesstoff in einem Filtermedium eingesetzt wird, können durch diese unterschiedlichen Vliesschichten einerseits unterschiedliche Komponenten gefiltert als auch die Eindringtiefe von Partikeln in die Vliesstoffe gesteuert werden.

Gemäß einer weiteren bevorzugten Ausführungsform der vorliegenden Erfindung kann mindestens eine Vliesschicht und/oder mindestens eine Verstärkungsschicht, bevorzugt mindestens eine Vliesschicht, des Filtermediums eine Aktivkomponente aufweisen. Bei der Aktivkomponente kann es sich z.B. um einen Katalysator und/ oder um eine Aktivkohle handeln. Aktivkohle bezeichnet ein Kohlenstoffmaterial mit hoher spezifischer Oberfläche. Diese kann zur Adsorption von Schadstoffen, wie z.B. Quecksilber oder giftigen organischen Lösungsmitteln, oder als Träger für Katalysatoren verwendet werden. Die Aktivkomponente kann durch kombinatorische Wirkung die mechanische Filtration um eine chemische Adsorption oder um eine reaktive, katalytische Reinigung ergänzen. Beispielsweise kann die Filtration von Rauchgas mit der katalytischen Entstickung kombiniert werden. Durch den Aufbau der Vliesschicht kann zudem die Verweilzeit von Medien (zum Beispiel Flüssigkeiten oder Gase) im Filter gesteuert werden um somit die notwendige Reaktionszeit für die katalytische Reaktion zu generieren.

Wenn für die Herstellung der Vliesschichten oder Verstärkungsschichten Fasern, bevorzugt präoxidierte PAN-Fasern, verwendet werden, so weisen diese Fasen einen mittleren Faserdurchmesser auf, der in einem Bereich von 200 nm bis 35 µm, bevorzugt in einem Bereich von 300 nm bis 30 µm, besonders bevorzugt in einem Bereich von 400 nm bis 25 µm, ganz besonders bevorzugt in einem Bereich von 500 nm bis 20 µm liegt. Typischerweise weisen Kohlenstoff-Fasern einen mittleren Faserdurchmesser von 5 bis 10 µm auf. Der mittlere Faserdurchmesser wird über Ausmessen unter Zuhilfenahme eines Mikroskops bestimmt. Über den mittleren Faserdurchmesser kann die Abscheideleistung gesteuert werden.

In einer noch weiteren bevorzugten Ausführungsform der vorliegenden Erfindung weist der verstärkte Vliesstoff des Filtermediums mindestens eine elektrisch leitfähige Vliesschicht und/oder mindestens eine elektrisch leitfähige Verstärkungsschicht auf und ist derart konfiguriert, dass eine elektrische Entladung und/oder ein Beheizen des Filters durch angelegten elektrischen Strom ermöglicht wird. Bei Verwendung als Filter kann die Entladung ermöglicht werden, in dem der Filter einen elektrischen Anschluss an den verstärkten Vliesstoff aufweist, zum elektrischen Entladen des Vliesstoffs. Hierdurch kann eine elektrische Aufladung des verstärkten Vliesstoffs verhindert und möglicher Funkenflug reduziert werden, welche sich schädigend auf die Filterstruktur auswirken können. Das Beheizen kann ermöglicht werden, in dem der Filter einen elektrischen Heiz-Stromkreis zum Aufheizen des verstärkten Vliesstoffes aufweist, mittels eines durch den verstärkten Vliesstoff geleiteten elektrischen Stroms. Das Beheizen des verstärkten Vliesstoffs ermöglicht die Abreinigung des Filters. Weiterhin kann durch das Beheizen die Verschmutzung durch Kondensation von Komponenten eingeschränkt bzw. verhindert werden. Weiterhin kann der Filter zusätzlich auch zum Aufheizen des zu filtrierenden Mediums, beispielsweise für Flüssigkeiten, genutzt werden. Vorteilhafterweise sind, sowohl mindestens eine Vliesschicht als auch mindestens eine Verstärkungsschicht elektrisch leitfähig. Diese elektrische Leitfähigkeit führt dazu, dass der verstärkte Vliesstoff nicht nur in einem Filtermedium, sondern auch als Elektrode eingesetzt werden kann.

Bevorzugt weist der verstärkte Vliesstoff des erfindungsgemäßen Filtermediums eine Reißfestigkeit von mindestens 10 dN/5cm, bevorzugt von mindestens 50 dN/5cm, besonders bevorzugt von mindestens 100 dN/5 cm auf und/oder eine Luftdurchlässigkeit von mindestens 20 L/(dm² *min) und höchstens 1000 L/(dm²*m) bei 200 Pa auf. Die Reißfestigkeit wird gemäß DIN EN 29073-3:1992-08 (Prüfverfahren für Vliesstoffe, Teil 3) bestimmt. Diese Reißfestigkeit führt zu einer Erhöhung der mechanischen Stabilität des Filtermediums, da eine erhöhte Dimensionsstabilität gegeben ist und sie führt zu längeren Lebensdauern, da mehr Reinigungszyklen durchgeführt werden können. Die Luftdurchlässigkeit wird gemäß DIN EN ISO 9073-15:2008-08 (Prüfverfahren für Vliesstoffe, Teil 15) bestimmt.

Gemäß einer weiteren Ausführungsform der vorliegenden Erfindung umfasst der verstärkte Vliesstoff des Filtermediums mindestens eine Vliesschicht mit einer Flächenmasse von mindestens 50 g/m² und höchstens 1000 g/m² und/oder mindestens eine Verstärkungsschicht mit einer Flächenmasse von mindestens 25 g/m² und höchstens 1000 g/m². Die Dicke des Filtermediums kann zwischen 0,2 mm und 10 mm liegen. Das Flächengewicht wird nach DIN EN 29073-1:1992-08 (Prüfverfahren für Vliesstoffe, Teil 1) und die Dicke wird nach DIN EN ISO 9073-2:1997-02 (Prüfverfahren für Vliesstoffe, Teil 2) bestimmt.

Gemäß einer noch weiteren bevorzugten Ausführungsform der vorliegenden Erfindung ist auf mindestens einer Vliesschicht des Filtermediums eine Beschichtung aufgebracht. Diese Beschichtung kann bevorzugt in Form von Fasern, Membranen oder Partikeln aufgebracht sein. Die Beschichtung kann dabei jeweils auf einer Seite oder auf beiden Seiten der des verstärkten Vliesstoffs aufgebracht sein. Die Beschichtung kann Fasern mit einem Faserdurchmesser von 50 nm bis 5000 nm, bevorzugt von 200 nm bis 1000 nm aufweisen. Erfolgt eine Beschichtung mit Partikeln, so weisen diese Partikel eine mittlere Partikelgröße zwischen 10 nm und 100 µm auf. Die mittlere Partikelgröße wird lasergranulometrisch (ISO 13320) bestimmt. Es kann auch eine Beschichtung mit einer Membran erfolgen, wobei die Dicke der Membran kleiner als 100 µm ist. Vorzugsweise weist die Beschichtung ein Material ausgewählt aus der Gruppe bestehend aus Fluorpolymer-Fasern, PAN-Fasern, keramischen Fasern, PTFE-Membranen, Ruß oder anderen Kohlenstoffpartikeln wie z.B. Graphit oder keramische Partikel auf. Das Aufbringen einer Beschichtung auf mindestens einer Vliesschicht kann zu einer Erhöhung der Verschleißbeständigkeit und/oder zu einer Reduktion des Abriebs führen sowie den Abscheidegrad erhöhen.

Im Rahmen der Erfindung ist es möglich, dass die einzelnen genannten Ausführungsformen des Filtermediums miteinander kombiniert werden.

Das erfindungsgemäße Filtermedium eignet sich zum Filtern von Flüssigkeiten oder Gasen.

Die erfindungsgemäßen Filtermedien, insbesondere die teilkarbonisierten und karbonisierten Medien mit einer Verstärkungsschicht ausgewählt aus der Gruppe bestehend aus präoxidierten PAN-Fasern, teilkarbonisierten PAN-Fasern oder Kohlenstofffasern zeigen eine sehr gute chemische Beständigkeit in verschiedenen Medien. So erfolgt beispielsweise in anorganischen und/oder oxidierenden anorganischen Säuren, wie beispielsweise Salzsäure (37%), Schwefelsäure (80%) oder Salpetersäure (65%), als auch in alkalischen Medien wie zum Beispiel Ammoniak (28%) kein Angriff oder Abbau der Filtermedien. Ein Gewichtsverlust nach Auslagerung bei Raumtemperatur oder unter Rückfluss für 100 h zeigt keine messbare Gewichtsabnahme.

Weiterhin sind die erfindungsgemäßen Filtermedien sehr wasser- und ölbeständig. Alle erfindungsgemäßen Filtermedien zeigen bei Raumtemperatur oder unter Rückfluss für 100 h keine messbare Gewichtsabnahme. Insbesondere die Ölbeständigkeit bis zu 200 °C ist überraschend. Weiterhin sind die erfindungsgemäßen Filtermedien für Kälteanwendungen geeignet. Der Kontakt mit Medien oder Kältemischungen im Temperaturbereich von bis zu -190 °C zeigt keinerlei Versprödung oder mechanische Schädigung des Materials, auch nach mechanischer Belastung in Anlehnung an die ISO 974 (Plastics - Determination of the brittleness temperature by impact).

Insbesondere eignen sich die erfindungsgemäßen Filtermedien zum Filtern von Gasen bei einer Temperatur von mindestens bis zu 260 °C, wobei das Filtermedium bis mindestens 260 °C hitzebeständig und nicht brennbar ist oder die Filtermedien können zur Filterung von flüssigen Substanzen, insbesondere von chemisch reaktiven Substanzen, verwendet werden.

Die vorliegende Erfindung betrifft auch ein Verfahren zur Herstellung der erfindungsgemäßen Filtermedien umfassend die Schritte:
- Bereitstellen mindestens einer aus präoxidiertem PAN bestehenden Vliesschicht und mindestens einer Verstärkungsschicht, wobei die Verstärkungsschicht eine erste Seite und eine zweite Seite aufweist; wobei ein Material der mindestens einen Verstärkungsschicht (20) ausgewählt aus der Gruppe bestehend aus Metallfasern, Metalldrähten, präoxidierten PAN-Fasern, teilkarbonisierten PAN-Fasern oder Kohlenstofffasern ist; und
- Verfestigen der mindestens einen aus präoxidiertem PAN bestehenden Vliesschicht mit der Verstärkungsschicht, so dass die Verstärkungsschicht von mindestens einer der ersten Seite und/oder der zweiten Seite von der mindestens einen Vliesschicht bedeckt ist.

Der Begriff "Verfestigen" beschreibt das Assemblieren von bestimmten Bestandteilen zu einem verstärkten Vliesstoff unter beispielsweise der Verwendung der Vernadelung oder der Wasserstrahlverfestigung.

Eine Temperaturbehandlung kann erfolgen, entweder vor oder nach dem Verfestigen, vorzugsweise nach dem Verfestigen.

Vorzugsweise erfolgt eine solche Temperaturbehandlung in einem Bereich von 260 °C bis 900 °C, bevorzugter in einem Bereich von 500 °C bis 900°C. Wird eine Metallfaser oder ein Metalldraht zur Herstellung der Verstärkungsschicht verwendet, so erfolgt vorteilhafterweise die Temperaturbehandlung vor dem Verfestigen. Wird hingegen das gleiche Material für mindestens eine Vliesschicht und mindestens eine Verstärkungsschicht verwendet, so erfolgt die Temperaturbehandlung vorteilhafterweise nach dem Verfestigen.

Mit dem genannten Verfahren können die erfindungsgemäßen Filtermedien in flächiger Form als auch in runder Form, wie als Rohr, Schlauch oder Hohlzylinder, hergestellt werden.

Nachfolgend wird die vorliegende Erfindung anhand von diese erläuternden, diese aber nicht einschränkenden Beispielen unter Bezugnahme auf die Zeichnungen weiter beschrieben.

### Ausführungsbeispiel:

Zur Herstellung eines Filtermediums wurde ein flächiger verstärkter Vliesstoff hergestellt, indem ein Grid als Verstärkungsschicht bestehend aus Kohlenstofffasern verwendet wurde, aufweisend ein Flächengewicht von ca. 150 g/m². Die Ribben in Kett- und Schussrichtung wiesen dabei einen 90 °C Winkel auf und bestanden in beiden Richtungen aus Kohlenstofffasern. Der Fadenabstand (bezogen auf die Mitte der Ribben) betrug ca. 25 mm. Die entstehende Gitteröffnung / Abstand zwischen den Seiten der Ribben betrug ca. 23 mm.

Weiterhin wurde eine Vliesschicht bestehend aus ausgehend von präoxidiertem PAN (SGL - PANOX; C63-1.7/1.39-A110) durch Wasserstrahlverfestigung hergestellt (PANOX) und dann auf beide Seiten der obigen Verstärkungsschicht durch Wasserstrahl verfestigt. Man erhielt einen verstärkten Vliesstoff mit einem Flächengewicht von ca. 800 g/m², Dicke von 3,5 mm (gemessen auf den Grid-Ribben) und einer Reißfestigkeit von 60 dN/cm.

Die Figuren sind schematisch und dienen zur Erläuterung von spezifischen Ausführungsformen der vorliegenden Erfindung.

In dieser Hinsicht werden die Richtung betreffende Begriffe, wie "erste Seite", "zweite Seite" usw. ohne Bezug auf die Orientierung der beschriebenen Figur (en) verwendet. Für eine Filteranwendung werden diese Begriffe vorzugsweise, aber nicht notwendigerweise im Zusammenhang mit einer etwaigen Fließrichtung einer zu filternden Substanz beschrieben. Weil Komponenten von Ausführungsformen in einer Anzahl verschiedener Orientierungen positioniert werden können, werden die die Richtung betreffenden Begriffe nur zur Erläuterung verwendet und sollten in keiner Weise als einschränkend angesehen werden. Insbesondere, kann in einigen Ausführungsformen keine zu "filternde Substanz" vorliegen (z.B. könnte dies bei Anwendung des Vliesstoffs als Elektrodenmaterial sein). In derartigen Fällen sind Beschreibungen, wie z.B. "erste Seite", "zweite Seite" als beliebige Orientierung zu verstehen.

Die Figuren zeigen verschiedene Ausführungsformen des erfindungsgemäßen verstärkten Vliesstoffes:
Figur 1 zeigt einen Querschnitt eines verstärkten Vliesstoffs gemäß einer Ausführungsform,
Figur 2 zeigt einen Querschnitt eines verstärkten Vliesstoffs gemäß einer weiteren Ausführungsform,
Figur 3 zeigt einen Querschnitt eines verstärkten Vliesstoffs gemäß einer noch weiteren Ausführungsform,
Figur 4 zeigt einen Querschnitt eines verstärkten Vliesstoffs gemäß noch einer weiteren Ausführungsform.

Im Folgenden wird auf die einzelnen Figuren näher eingegangen.

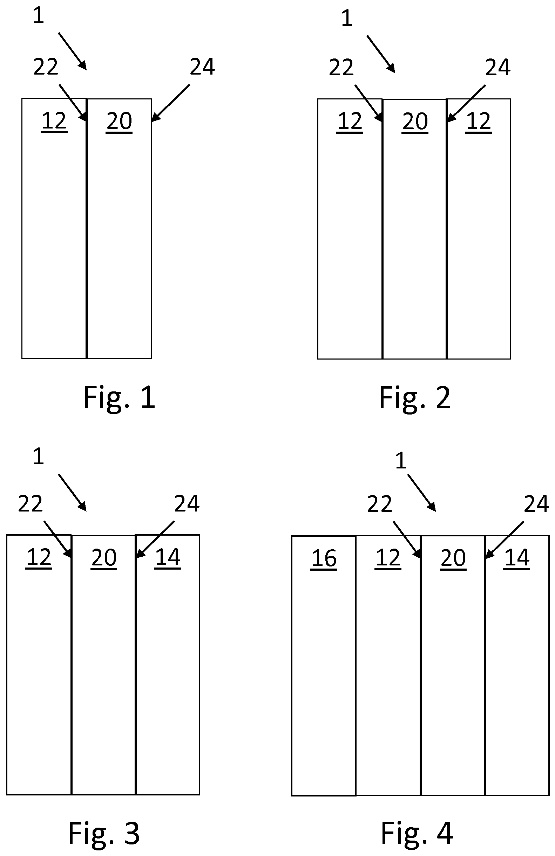

Figur 1 zeigt einen Querschnitt eines verstärkten Vliesstoffs gemäß einer Ausführungsform. Der verstärkte Vliesstoff (1) weist mindestens eine aus präoxidiertem PAN bestehende Vliesschicht (12) und eine Verstärkungsschicht (20) auf. Die Verstärkungsschicht (20) weist eine erste Seite (22) und eine zweite Seite (24) auf, wobei die Verstärkungsschicht (20) von mindestens einer der ersten Seite (22) und der zweiten Seite (24) von der mindestens einen Vliesschicht (12) bedeckt ist. Vorzugsweise ist die erste Seite (22) hin zu einer Fließrichtung einer zu filternden Substanz angeordnet und die zweite Seite (24) weg von der Fließrichtung der zu filternden Substanz angeordnet.

Figur 2 zeigt eine weitere bevorzugte Ausführungsform des verstärkten Vliesstoffes, bei welcher die Verstärkungsschicht (20) sowohl von der ersten Seite (22) als auch von der zweiten Seite (24) von der mindestens einen Vliesschicht (12) bedeckt.

Gemäß einer Ausführungsform kann der verstärkte Vliesstoff mindestens zwei Vliesschichten (12, 14) aufweisen, wobei eine erste Vliesschicht (12) an der ersten Seite (22) der Verstärkungsschicht (20) und eine zweite Vliesschicht (14) an der zweiten Seite (24) der Verstärkungsschicht (20) angeordnet sein können, wie in Figur 3 dargestellt.

Figur 4 zeigt eine weitere Ausführungsform des verstärkten Vliesstoffs, welcher mindestens drei Vliesschichten (12,14,16) aufweist, wobei mindestens zwei Vliesschichten (12,16) an der ersten Seite (22) angeordnet sind. Hierbei kann jeder der an der ersten Seite (22) angeordneten Vliesschichten (12,16) unterschiedliche Materialeigenschaften aufweisen. Bei Verwendung des verstärkten Vliesstoffs als Filter kann jeder der an der ersten Seite (22) angeordneten Vliesschichten (12,16) zur Filterung unterschiedlicher Komponenten geeignet sein. Vorteilhafterweise können die an der ersten Seite (22) angeordneten Vliesschichten (12,16) jeweils geeignet sein, Komponenten oberhalb einer bestimmten Größe zu filtern. Hierdurch kann es möglich sein die zu filternde Substanz graduell nach Größe der Komponenten zu filtern.

### BEZUGSZEICHENLISTE

- 1: verstärkter Vliesstoff
- 12, 14, 16: aus präoxidiertem PAN bestehende Vliesschicht
- 20: Verstärkungsschicht
- 22: erste Seite der Verstärkungsschicht
- 24: zweite Seite der Verstärkungsschicht

## Patentansprüche

1. Filtermedium umfassend einen verstärkten Vliesstoff (1), wobei der Vliesstoff mindestens eine aus präoxidiertem Polyacrylnitryl (PAN) bestehende Vliesschicht (12, 14, 16) und mindestens eine Verstärkungsschicht (20) aufweist, wobei die mindestens eine Verstärkungsschicht (20) eine erste Seite (22) und eine zweite Seite (24) aufweist, wobei die mindestens eine Verstärkungsschicht (20) von der ersten Seite (22) und/oder der zweiten Seite (24) von der mindestens einen Vliesschicht (12, 14, 16) bedeckt ist und wobei ein Material der mindestens einen Verstärkungsschicht (20) ausgewählt aus der Gruppe bestehend aus Metallfasern, Metalldrähten, präoxidierten PAN-Fasern, teilkarbonisierten PAN-Fasern oder Kohlenstoff-fasern ist..

2. Filtermedium nach Anspruch 1, wobei das Filtermedium eine flächige oder runde Form aufweist.

3. Filtermedium nach Anspruch 1 oder 2, wobei die mindestens eine Verstärkungsschicht (20) ein Gewebe, ein Gelege, ein Gewirk, ein Gestrick, ein Geflecht oder ein Grid ist.

4. Filtermedium nach einem der vorhergehenden Ansprüche, wobei die mindestens eine Vliesschicht (12, 14, 16) und/oder die mindestens eine auf präoxidiertem PAN basierte Verstärkungsschicht (20) teilkarbonisiert oder karbonisiert ist.

5. Filtermedium nach Anspruch 1, wobei der verstärkte Vliesstoff (1) mindestens zwei Vliesschichten (12, 14) aufweist, wobei eine erste Vliesschicht (12) an der ersten Seite (22) der Verstärkungsschicht (20) und eine zweite Vliesschicht (14) an der zweiten Seite (24) der Verstärkungsschicht (20) angeordnet sind.

6. Filtermedium nach Anspruch 1, wobei mindestens zwei Vliesschichten (12, 16) an der ersten Seite (22) der Verstärkungsschicht (20) angeordnet sind, wobei jede der an der ersten Seite (22) der Verstärkungsschicht angeordneten Vliesschichten (12, 16) unterschiedliche Materialeigenschaften aufweist.

7. Filtermedium nach Anspruch 1, wobei mindestens eine der Verstärkungsschichten (20) eine Aktivkomponente aufweist.

8. Filtermedium nach Anspruch 1, wobei mindestens eine der Vliesschichten (12, 14, 16) Fasern mit einem mittleren Faserdurchmesser, der in einem Bereich von 200 nm bis 35 µm liegt, aufweist.

9. Filtermedium nach Anspruch 1, wobei der verstärkte Vliesstoff (1) mindestens eine elektrisch leitfähige Vliesschicht (12, 14, 16) und/oder eine mindestens eine elektrisch leitfähige Verstärkungsschicht (20) aufweist, und derart konfiguriert ist, dass eine elektrische Entladung und/oder ein Beheizen des Filters durch angelegten elektrischen Strom ermöglicht wird.

10. Filtermedium nach Anspruch 1, wobei der verstärkte Vliesstoff (1) eine Reißfestigkeit von mindestens 10 dN/5cm gemäß DIN EN 29073-3:1992-08, und/oder eine Luftdurchlässigkeit von mindestens 20 L/(dm²*min) und höchstens 1000 L/(dm²*min) bei 200 Pa gemäß DIN EN ISO 9073-15:2008-08 aufweist.

11. Filtermedium nach Anspruch 1, wobei die Flächenmasse der mindestens einen Vliesschicht (12, 14, 16) mindestens 50 g/m² und höchstens 1000 g/m² und/oder die Flächenmasse der Verstärkungsschicht (20) mindestens 25 g/m² und höchstens 1000 g/m² beträgt.

12. Filtermedium nach Anspruch 1, wobei auf mindestens eine der Vliesschichten (12, 14, 16) eine Beschichtung aufgebracht ist.

13. Verwendung eines Filtermedium nach einem der Ansprüche 1 bis 12 zum Filtern von Gasen, wobei das Filtermedium geeignet ist, Gase mit einer Temperatur von mindestens bis zu 260 °C zu filtern, und das Filtermedium bis mindestens 260 °C hitzebeständig und nicht brennbar ist.

14. Verfahren zur Herstellung eines Filtermediums nach einem der Ansprüche 1 bis 13, umfassend die Schritte:
- Bereitstellen mindestens einer aus präoxidiertem PAN bestehenden Vliesschicht (12, 14, 16) und mindestens einer Verstärkungsschicht (20), wobei die mindestens eine Verstärkungsschicht (20) eine erste Seite (22) und eine zweite Seite (24) aufweist, und wobei ein Material der mindestens einen Verstärkungsschicht (20) ausgewählt aus der Gruppe bestehend aus Metallfasern, Metalldrähten, präoxidierten PAN-Fasern, teilkarbonisierten PAN-Fasern oder Kohlenstofffasern ist
und
- Verfestigen der mindestens einen aus präoxidiertem PAN bestehenden Vliesschicht (12, 14, 16) mit der mindestens einen Verstärkungsschicht (20), so dass die mindestens eine Verstärkungsschicht (20) von mindestens einer der ersten Seite (22) und/oder der zweiten Seite (24) von der mindestens einen Vliesschicht (12, 14, 16) bedeckt ist.

15. Verfahren zur Herstellung eines Filtermediums nach Anspruch 14, wobei ein Schritt des Temperaturbehandelns vor oder nach dem Schritt des Verfestigens, bevorzugt nach dem Verfestigen, erfolgt.

## Claims

1. A filter medium comprising a reinforced nonwoven material (1), wherein the nonwoven material comprises at least one nonwoven layer (12, 14, 16) consisting of preoxidized polyacrylonitrile (PAN) and at least one reinforcing layer (20), wherein the at least one reinforcing layer (20) comprises a first side (22) and a second side (24), wherein the at least one reinforcing layer (20) is covered on the first side (22) and/or the second side (24) by the at least one nonwoven layer (12, 14, 16), and wherein a material of the at least one reinforcing layer (20) is selected from the group consisting of metal fibers, metal wires, preoxidized PAN fibers, partially carbonized PAN fibers or carbon fibers.

2. The filter medium according to claim 1, wherein the filter medium comprises a flat or round shape.

3. The filter medium according to claim 1 or 2, wherein the at least one reinforcing layer (20) is a woven material, a laid material, a warp-knitted material, a knitted material, a braid or a grid.

4. The filter medium according to any one of the preceding claims, wherein the at least one nonwoven layer (12, 14, 16) and/or the at least one preoxidized PAN-based reinforcing layer (20) is partially carbonized or carbonized.

5. The filter medium according to claim 1, wherein the reinforced nonwoven material (1) comprises at least two nonwoven layers (12, 14), wherein a first nonwoven layer (12) is arranged on the first side (22) of the reinforcing layer (20) and a second nonwoven layer (14) is arranged on the second side (24) of the reinforcing layer (20).

6. The filter medium according to claim 1, wherein at least two nonwoven layers (12, 16) are arranged on the first side (22) of the reinforcing layer (20), wherein each of the nonwoven layers (12, 16) arranged on the first side (22) of the reinforcing layer has different material properties.

7. The filter medium according to claim 1, wherein at least one of the reinforcing layers (20) comprises an active component.

8. The filter medium according to claim 1, wherein at least one of the nonwoven layers (12, 14, 16) comprises fibers having an average fiber diameter which is in a range from 200 nm to 35 µm.

9. The filter medium according to claim 1, wherein the reinforced nonwoven material (1) comprises at least one electrically conductive nonwoven layer (12, 14, 16) and/or at least one electrically conductive reinforcing layer (20), and is configured in such a way that an electrical discharge and/or a heating of the filter is made possible by an applied electrical current.

10. The filter medium according to claim 1, wherein the reinforced nonwoven material (1) has a tensile strength of at least 10 dN/5cm according to DIN EN 29073-3:1992-08, and/or an air permeability of at least 20 L/(dm²*min) and at most 1000 L/(dm²*min) at 200 Pa according to DIN EN ISO 9073-15:2008-08.

11. The filter medium according to claim 1, wherein the mass per unit area of the at least one nonwoven layer (12, 14, 16) is at least 50 g/m² and at most 1000 g/m² and/or the mass per unit area of the reinforcing layer (20) is at least 25 g/m² and at most 1000 g/m².

12. The filter medium according to claim 1, wherein a coating is applied to at least one of the nonwoven layers (12, 14, 16).

13. Use of a filter medium according to any one of claims 1 to 12 for filtering gases, wherein the filter medium is suitable for filtering gases having a temperature of at least up to 260°C, and the filter medium is heat-resistant and non-flammable up to at least 260°C.

14. A method of manufacturing a filter medium according to any one of claims 1 to 13, comprising the steps of:
- providing at least one nonwoven layer (12, 14, 16) consisting of preoxidized PAN and at least one reinforcing layer (20), wherein the at least one reinforcing layer (20) comprises a first side (22) and a second side (24), and wherein a material of the at least one reinforcing layer (20) is selected from the group consisting of metal fibers, metal wires, preoxidized PAN fibers, partially carbonized PAN fibers or carbon fibers
and
- strengthening the at least one non-woven layer (12, 14, 16) consisting of preoxidized PAN with the at least one reinforcing layer (20), so that the at least one reinforcing layer (20) is covered on the first side (22) and/or the second side (24) by the at least one non-woven layer (12, 14, 16).

15. The method of manufacturing a filter medium according to claim 14, wherein a step of temperature treatment is carried out before or after the step of strengthening, preferably after the step of strengthening.

## Revendications

1. Milieu filtrant comprenant un tissu non tissé renforcé (1), le tissu non tissé étant au moins une couche non tissée (12, 14, 16) constituée de polyacrylonitrile préoxydé (PAN) et au moins une couche de renforcement (20), ladite au moins une couche de renforcement (20) ayant un premier côté (22) et un deuxième côté (24), dans lequel la au moins une couche de renforcement (20) est recouverte par le premier côté (22) et/ou le deuxième côté (24) de la au moins une couche non tissée (12, 14, 16) et dans lequel un matériau de la au moins une couche de renforcement (20) est choisi dans le groupe constitué par les fibres métalliques, les fils métalliques, les fibres PAN préoxydées, les fibres PAN partiellement carbonisées ou les fibres de carbone..

2. Milieu filtrant selon la revendication 1, dans lequel le milieu filtrant présente une forme plate ou ronde.

3. Milieu filtrant selon la revendication 1 ou 2, dans lequel ladite au moins une couche de renforcement (20) est un tissu, une nappe, un tricot, une maille, un treillis ou une grille.

4. Milieu filtrant selon l'une quelconque des revendications précédentes, dans lequel ladite au moins une couche non tissée (12, 14, 16) et/ou ladite au moins une couche de renforcement (20) à base de PAN préoxydé est partiellement carbonisée ou carbonisée.

5. Milieu filtrant selon la revendication 1, dans lequel le non-tissé renforcé (1) comprend au moins deux couches de non-tissé (12, 14), une première couche de non-tissé (12) étant disposée sur le premier côté (22) de la couche de renforcement (20) et une deuxième couche de non-tissé (14) étant disposée sur le deuxième côté (24) de la couche de renforcement (20).

6. Milieu filtrant selon la revendication 1, dans lequel au moins deux couches de non-tissé (12, 16) sont disposées sur le premier côté (22) de la couche de renforcement (20), chacune des couches de non-tissé (12, 16) disposées sur le premier côté (22) de la couche de renforcement présentant des propriétés de matériau différentes.

7. Milieu filtrant selon la revendication 1, dans lequel au moins l'une des couches de renforcement (20) comprend un composant actif.

8. Milieu filtrant selon la revendication 1, dans lequel au moins l'une des couches non tissées (12, 14, 16) comprend des fibres ayant un diamètre moyen de fibre qui se situe dans une plage de 200 nm à 35 µm.

9. Milieu filtrant selon la revendication 1, dans lequel le non-tissé renforcé (1) comprend au moins une couche de non-tissé électriquement conductrice (12, 14, 16) et/ou au moins une couche de renforcement électriquement conductrice (20), et est configuré de manière à permettre une décharge électrique et/ou un chauffage du filtre par un courant électrique appliqué.

10. Milieu filtrant selon la revendication 1, dans lequel le non-tissé renforcé (1) présente une résistance à la déchirure d'au moins 10 dN/5cm selon DIN EN 29073-3:1992-08, et/ou une perméabilité à l'air d'au moins 20 L/(dm²*min) et d'au plus 1000 L/(dm²*min) à 200 Pa selon DIN EN ISO 9073-15:2008-08.

11. Milieu filtrant selon la revendication 1, dans lequel la masse surfacique de la au moins une couche de non-tissé (12, 14, 16) est d'au moins 50 g/m²et d'au plus 1000 g/m²et/ou la masse surfacique de la couche de renforcement (20) est d'au moins 25 g/m²et d'au plus 1000 g/m².

12. Milieu filtrant selon la revendication 1, dans lequel un revêtement est appliqué sur au moins l'une des couches de non-tissé (12, 14, 16).

13. Utilisation d'un milieu filtrant selon l'une des revendications 1 à 12 pour filtrer des gaz, le milieu filtrant étant apte à filtrer des gaz ayant une température d'au moins jusqu'à 260°C, et le milieu filtrant étant résistant à la chaleur et ininflammable jusqu'à au moins 260°C.

14. Procédé de fabrication d'un milieu filtrant selon l'une quelconque des revendications 1 à 13, comprenant les étapes consistant à :
- fournir au moins une couche non tissée (12, 14, 16) constituée de PAN préoxydé et au moins une couche de renforcement (20), dans lequel ladite au moins une couche de renforcement (20) a un premier côté (22) et un second côté (24), et dans lequel un matériau de ladite au moins une couche de renforcement (20) est choisi dans le groupe constitué par des fibres métalliques, des fils métalliques, des fibres de PAN préoxydé, des fibres de PAN partiellement carbonisé ou des fibres de carbone
et
- la consolidation de la au moins une couche de PAN préoxydé non tissé (12, 14, 16) avec la au moins une couche de renforcement (20), de sorte que la au moins une couche de renforcement (20) soit séparée d'au moins l'une de la première face (22) et de la deuxième face (24). est recouverte par ladite au moins une couche de non-tissé (12, 14, 16).

15. Procédé de fabrication d'un milieu filtrant selon la revendication 14, dans lequel une étape de traitement thermique est réalisée avant ou après l'étape de solidification, de préférence après la solidification.
